# EUROPEAN PATENT APPLICATION

(11) **EP 4 707 869 A1**
(43) Date of publication of application: **11.03.2026**
(21) Application number: 25195365.9
(22) Date of filing: 12.08.2025
(51) Int. Cl.: G01S 19/21, G01S 19/20, G01S 19/14, G01S 19/08

(54) **GPS / GNSS SPOOFING AND JAMMING ATTACK DETECTION METHOD UTILIZING CELLULAR NETWORKS**

(30) Priority: 04.09.2024 EP 24198369
(71) Applicant: Dimetor GmbH, 4203 Altenberg/Linz (AT)
(72) Inventor: Neubauer, Thomas, 4203 Altenberg bei Linz (AT); Wana, Thomas, 1210 Vienna (AT)
(74) Representative: Grünecker Patent- und Rechtsanwälte PartG mbB

(57) **Abstract**

Provided are a method and a system for detecting position measurement anomalies in a global navigation satellite system (GNSS) for a plurality of stationary GNSS receivers. Therein, GNSS measurement indication from a GNSS receiver is determined to be affected by an anomaly if the GNSS measurement indication is not received at a configured timing, if the measured GNSS signal parameter value is invalid or deviates from a recorded position of the GNSS receiver or from a recorded GNSS signal parameter value from a past measurement by the stationary GNSS receiver. Accordingly, the present disclosure facilitates cost efficient, areawide, high-resolution, and continuous monitoring of GNSS anomalies (such as spoofing or jamming attacks).

## Description

### Technical Field

The present disclosure relates to the field of wireless communication. In particular, a method and an apparatus are disclosed herein for the wide area live detection of GPS jamming and spoofing, e.g. utilizing cellular infrastructure.

### Background

With more and more systems and solutions relying on accurate positioning and navigation technologies, such as GPS (Global Positioning System) or generally GNSS (Global Navigation Satellite Systems), the accuracy and reliability of GNSS signals becomes a safety and mission critical requirement. This is particularly true for autonomous systems, such as autonomous driving, self-driving trucks, autonomous robots, uncrewed aviation and drones, but also general aviation, which heavily rely and depend on the availability of correct positioning information derived from GPS and equivalent technologies.

### Summary

The present disclosure provides GPS / GNSS spoofing and jamming attack detection methods and apparatuses utilizing stationary GNSS receivers, which may be deployed in cellular networks.

Provided is an anomaly detection method for detecting position measurement anomalies in a global navigation satellite system, GNSS. The anomaly detection method comprises steps of: storing, for each of a plurality of stationary GNSS receivers, a position record indicating a recorded position of the stationary GNSS receiver or a GNSS measurement record indicating a recorded GNSS signal parameter value from a past measurement by the stationary GNSS receiver; receiving, from each of the plurality of stationary GNSS receivers, a GNSS measurement indication, the GNSS measurement indication indicating a measured GNSS signal parameter value measured by the stationary GNSS receiver; and determining, for each of the plurality of stationary GNSS receivers, whether the GNSS measurement indication is affected by an anomaly. The GNSS measurement indication is determined to be affected by an anomaly if the GNSS measurement indication is not received at a configured timing, if the measured GNSS signal parameter value is invalid or deviates from the recorded position or from the GNSS measurement record. The method comprises, if it is determined that one or more stationary GNSS receivers among the plurality of stationary GNSS receivers are affected by an anomaly, localizing an area affected by the anomaly and/or a source of the anomaly based on position records of the one or more stationary GNSS receivers affected by the anomaly and/or based on the measured signal parameter value.

Further provided is an anomaly detection system for detecting position measurement anomalies in a global navigation satellite system, GNSS, the anomaly detection system comprising: a storage configured to store, for each of a plurality of stationary GNSS receivers, a position record indicating a recorded position of the stationary GNSS receiver or a GNSS measurement record indicating a recorded GNSS signal parameter value from a past measurement by the stationary GNSS receiver; a data interface configured to receive, from each of the plurality of stationary GNSS receivers, a GNSS measurement indication indicating a measured GNSS signal parameter value measured by the stationary GNSS receiver; and processing circuitry configured to determine, for each of the plurality of stationary GNSS receivers, whether the GNSS measurement indication is affected by an anomaly, wherein the processing circuitry is configured to determine that the measured GNSS measurement indication is affected by an anomaly if the GNSS measurement indication is not received at a configured timing or if the measured GNSS signal parameter value is invalid or deviates from the recorded position or from the GNSS measurement record. The processing circuitry is configured to, if it is determined that one or more stationary GNSS receivers among the plurality of stationary GNSS receivers are affected by an anomaly, localize an area affected by the anomaly and/or a source of the anomaly based on position records of the one or more stationary GNSS receivers affected by the anomaly and/or based on the measured signal parameter value.

An anomaly detection method and an anomaly detection apparatus provided by the present disclosure facilitate reliable, efficient and area-wide detection of anomalies in GNSS data caused e.g. by jamming or spoofing attacks.

Further provided is a computer program comprising instructions which, when the program is executed by a computer, cause the computer to carry out the anomaly detection method of the present disclosure.

Further provided is a non-transitory computer-readable storage medium having stored thereon instructions to cause processing circuitry of a computer to carry out the anomaly detection method of the present disclosure.

### Brief Description of Drawings

In the following detailed description, exemplary embodiments are described in more detail with reference to the accompanying figures and drawings, wherein:
- **Fig. 1**: illustrates a spoofing and jamming attack as well as possible exemplary targets of such attacks;
- **Fig. 2**: is a flow chart showing steps of an anomaly detection method according to the present disclosure.
- **Fig. 3**: is a block diagram showing an anomaly detection system according to the present disclosure;
- **Fig. 4**: illustrates data fusion of GNSS measurement data from receivers of multiple networks and other receivers;
- **Fig. 5**: illustrates localization of an area affected by an anomaly and/or of a source of the anomaly.
- **Fig. 6**: is a flow chart showing an anomaly detection method according to an embodiment;
- **Fig. 7**: is a block diagram showing an anomaly detection system according to the present disclosure;
- **Figs. 8A-D**: are schematic drawings illustrating hexagonal tiling and different shapes of anomalies;
- **Fig. 9**: is a flow chart showing a method for anomaly detection and indication per sub-area according to an embodiment;
- **Fig. 10**: illustrates a division of the monitored area into sub-ranges by hexagonal tiling within each of a plurality of altitude subranges;
- **Fig. 11**: shows an illustrative example of different sizes of sub-areas of the monitored area for different altitude sub-ranges;
- **Fig. 12**: illustrates the distinction between event based monitoring and live monitoring based on GNSS sensors or receivers from which GNSS data is continuously available; and
- **Figs. 13 and 14**: are block diagrams illustrating interaction of an anomaly detection system with a cellular network and recipient systems of anomaly detection reporting.

### Detailed description

As mentioned, the accuracy and reliability of the signals from the GNSS technologies is becoming an important factor in the safe and reliable operation of systems such as autonomous systems and aviation.

Therefore, such systems and applications are becoming vulnerable against wrong, incorrect, and misleading positioning information, or positioning information that is disturbed and falsified on purpose. GNSS signals can be disturbed on purpose relatively easily, as a means of a security and cyber-attack. There are two types widely known, called GPS jamming and GPS spoofing (or, more generally, GNSS jamming and GNSS spoofing, which are also referred to simply as "jamming" and "spoofing").

GNSS jamming is an act of using a frequency transmitting device to block or interfere with radio communications. GNSS jamming involves saturating GNSS receivers with unknown signals to render the receiver unusable, essentially degrading the users' ability to effectively use the GNSS for navigational purposes.

GNSS spoofing is a malicious technique that manipulates the GNSS data, thereby misleading a GNSS receiver about its actual location.

GNSS spoofing, which is a kind of GNSS simulation, refers to the practice of manipulating or tricking a GNSS receiver by broadcasting false GNSS signals. Spoofing involves transmitting false GNSS signals to deceive receivers into calculating incorrect positions.

The range of the spoofing attack can be very wide. The maximum range of GNSS spoofing attacks can vary significantly depending on the equipment and methods used. It is assumed that commonly, spoofing devices can impact receivers within a range of about 34 kilometers, using standard, easily accessible equipment.

Essentially, spoofing misleads the GNSS receiver into believing it is located somewhere it is not, resulting in the device providing inaccurate location data. This form of cyber-attack undermines the reliability of GNSS data, which is important for a variety of applications.

Systems are considered more robust against jamming attacks. Spoofing is an even bigger problem as the GPS signal is not blocked, but just "wrong". For example, aircraft equipped with advanced Inertia Reference Systems ("IRS") are able to continue operating sufficiently when GPS signals are jammed, but GPS Spoofing is a new threat which may find a hidden back-door through the navigation software to completely disable the entire navigation system.

Spoofing may also affect more advanced high precision GNSS systems, such as "Differential GPS" (DGPS) systems. DGPS relies on the same GPS signals as standard GPS but enhances accuracy by using reference stations to correct errors. However, since spoofing involves transmitting false GPS signals to deceive receivers into calculating incorrect positions, this can affect both the reference stations and the user receivers in a DGPS setup, leading to inaccurate corrections and ultimately incorrect positioning.

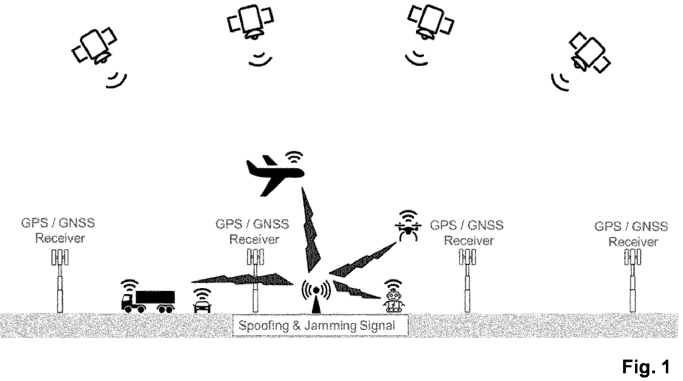

As illustrated in **Fig. 1****,** technical systems susceptible to spoofing include crewed aviation as well as uncrewed aviation as an autonomous system, among other autonomous or assisted systems such as self-driving or assisted trucks or cars, e.g. in "Autopilot mode", that may be "spoofed off the road by such cyber-attacks, autonomous robots, or in water. As an example of the latter, GPS spoofing attacks in large shipping ports, may cause risks for the ships as they rely on accurate GNSS signals for navigating the massive vessels.

GNSS Spoofing may be looked at from the GNSS receiver perspective, e.g. from the individual end user's perspective, to understand if the GPS positioning data is actually manipulated or not. To do so, several different approaches may be applied:
- Mathematical models of possible movements: For example, if the received signals are outside the expected parameter ranges, the received signal can be evaluated as falsified. Some systems also provide information about velocity and direction. Hence, depending on the type of application that is actually using the GNSS signal for positioning, a spoofing attack may be detected. For example, a ground robot will unlikely accelerate in a few seconds to 100km/h, whereas an uncrewed aerial vehicle might be able to do so.
- Data fusion: Data from multiple sources can be combined to identify if there are anomalies. This includes for example a GNSS receiver supporting multiple receiving units for different GNSS systems such as GPS, GLONASS (Russian: *Global'naya Navigatsionnaya Sputnikovaya Sistema,* lit. 'Global Navigation Satellite System'), Beidou and Galileo. If the data from one service differs from another two or three, this may be evaluated as a spoofing attack.
- Pooling of GPS information: GNSS information from different GNSS receivers are sharing their position. In some cases of spoofing, they will all measure the same GNSS position, or same (sudden) offset, which is not possible. An issue may however be that individual GNSS receivers (e.g. from different self-driving cars, or robots, or drones) are not sharing the position with each other. Moreover, if the GPS spoofing attack is to add an offset, rather than the same position, it may not be detected.
- Doppler Shift Analysis: Yet other approaches may analyze Doppler shift of the GNSS signals and local clock to detect the occurrence of GPS spoofing.
- Antenna-aided techniques: These techniques make use of an antenna array and are based on the wide spatial correlation that the satellite signal has with respect to the spoofing signal during a spoofing attack. However, an antenna array is required at each GPS receiver, which may be unfeasible in large scale applications or small applications (but is used e.g. for military applications).
- Signal power monitoring techniques: GPS receivers may detect the signal levels from the GPS signal, and as spoofing signals are typically resulting in higher signal levels than the actual GPS signals, GPS receivers able to detect such difference may identify spoofing. A challenge is however that modern SDR (software defined radio) systems used for spoofing can emulate and ramp up the power levels over time to overcome such detection.
- Time Difference of Arrival analysis: Other approaches propose to leverage crowdsourcing to detect and localize GPS spoofing attacks and time difference of arrival analysis on the different sensors that are to be deployed. This however requires the deployment of a large amount of sensors.

With the above-mentioned approaches, the inventors have noted an issue that if the receiver wakes up to an already spoofing polluted area, and the signal is consistent, there is no chance to detect the falsified signal in a simple way without significant additional hardware and testing capabilities.

In view of the above, the inventors have noted that it is important to provide for area-wide detection of GNSS Jamming and Spoofing in a continuous manner that allows the alerting of the relevant management systems, such as Air Traffic Control, Control Centers for autonomous systems, Automated Systems and Services relying on accurate positioning information.

The approach of the disclosure involves utilizing massive sensor networks with existing GNSS receivers that are by nature static, i.e. stationary, in their position. For example, network nodes such as cellular base stations, e.g. of cellular wireless communication networks (or public mobile land networks, PLMN) including 4G, 5G, LTE and/or similar systems, may be used as they may use GPS receivers as part of the deployment. Other exemplary sensor locations comprise network nodes of broadcasting networks, electrical power grids, illumination systems, traffic control systems, weather detection systems, and/or radar systems.

Each of these sensor locations, for example the cell towers of a mobile network deployment, may contain such a GPS/GNSS receiver. If deployed, such a GNSS receiver is always on, as the timing signal may be used for synchronization of the cells in the network or equivalent.

Furthermore, data from these GNSS receivers, such as the timing signals, the position information and other relevant data can be read, transmitted and stored in a central or distributed location in the network. Infrastructure to transmit such GNSS data from each individual cell site to a central or distributed data base or operations center is existing in case of a cellular network.

Therefore, such GNSS related data from each cell site (base station location - which is static) can be generated and transmitted and made accessible in real time, in a continuous manner all the time in a cellular network.

In the present disclosure, these signals from the sensor network may be continuously monitored. By doing so, historical behavior of the data can be compared against the live data of each sensor. Consequently, any anomaly against the historical value can be identified, using different methodologies and data processing techniques.

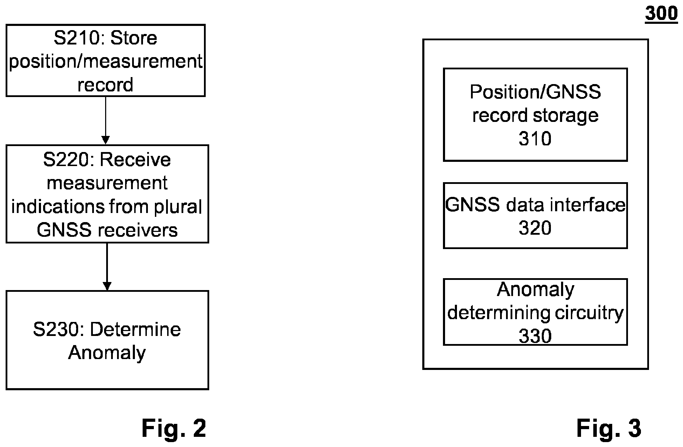

In particular, provided is an anomaly detection method for detecting position measurement anomalies in a global navigation satellite system (GNSS). As shown in Fig. 2, the method comprises a step S210 of storing, for each of a plurality of stationary GNSS receivers, a position record, which indicates a recorded position of the stationary GNSS receiver or a GNSS measurement record, which indicates a recorded GNSS signal parameter value from a past measurement by the stationary GNSS receiver. The method comprises step S220 of receiving, from each of the plurality of stationary GNSS receivers, a GNSS measurement indication. The GNSS measurement indication indicates a measured GNSS signal parameter value measured by the stationary GNSS receiver. The method further comprises a step S230 of determining, for each of the plurality of stationary GNSS receivers, whether the GNSS measurement indication is affected by an anomaly. In particular, in step S230, the GNSS measurement indication is determined to be affected by an anomaly if the GNSS measurement indication is not received at a configured timing, if the measured GNSS signal parameter value is invalid or deviates from the recorded position or from the recorded GNSS signal parameter value.

In correspondence with the above-described anomaly detection method, provided is an anomaly detection system for detecting position measurement anomalies in a global navigation satellite system, GNSS. As shown in **Fig. 3****,** the system 300 comprises a storage 310 configured to store, for each of a plurality of stationary GNSS receivers, a position record, which indicates a recorded position of the stationary GNSS receiver, or a GNSS measurement record, which indicates a recorded GNSS signal parameter value from a past measurement by the stationary GNSS receiver. The system further comprises a data interface 320 configured to receive, from each of the plurality of stationary GNSS receivers, a GNSS measurement indication indicating a measured GNSS signal parameter value measured by the stationary GNSS receiver. Further, the system 300 comprises processing circuitry configured to determine, for each of the plurality of stationary GNSS receivers, whether the GNSS measurement indication is affected by an anomaly. In particular, the processing circuitry is configured to determine that the measured GNSS measurement indication is affected by an anomaly if the GNSS measurement indication is not received at a configured timing or if the measured GNSS signal parameter value is invalid or deviates from the recorded position or from the recorded GNSS signal parameter value.

The anomaly detection system may be implemented as computing node such as a server, which may be centralized or distributed (e.g. as a server array), a cloud computing device, etc.

Furthermore, as mentioned above, the present disclosure may be implemented as a computer program. The instructions of the computer program may be stored on a non-transitory storage medium.

In accordance with the present disclosure, the GNSS may refer to GPS or any other global navigation satellite system such as GLONASS, Beidou, or Galileo. The GNSS receivers may also be referred to as GNSS sensors or GNSS detectors.

In the above-described method and system of the present disclosure, if the GNSS measurement indication from one of the GNSS receivers is received at the configured timing and if the GNSS signal parameter is valid and matches the recorded position or the recorded GNSS signal parameter value, no anomaly is determined to affect the GNSS measurement indication from the GNSS receiver.

A detection of an anomaly is an indication that the GNSS receiver that has transmitted the affected GNSS measurement indication is affected by a jamming or spoofing attack. In particular, if the GNSS measurement indication is not received at a configured timing or if the measured GNSS signal parameter included in the GNSS measurement indication is invalid, this may be an indication that a jamming attack has occurred. An "invalid" GNSS signal parameter value refers to a value that cannot be evaluated, does not correspond to a valid parameter range or format, or otherwise leads to an error or malfunctioning in the processing.

The GNSS measurement indication may be received by a wired interface, e.g. via a data line or cable, however, a wireless reception of the GNSS measurement indication is also possible.

For instance, the GNSS measurement indication may be received as a data packet on the application layer of the OSI (Open Systems Interconnection) model. Alternatively, in a case where protocols from lower layers than the application layer carry a record of a GNSS measurement indication, the GNSS measurement indication may also be read out from these lower layers.

In the determining whether a (newly or currently) received GNSS signal parameter value deviates from a recorded signal parameter value, a difference the received value and the recorded value may be compared to a threshold. If the difference is greater than the threshold, this may be determined to be an anomaly. An appropriate threshold value may be chosen to prevent minor deviations due to natural reasons, such as variations of the satellite signal propagation speed in the atmosphere.

The above-mentioned GNSS signal parameter value may be a position value, e.g. a measured value of the GNSS position (e.g. coordinate values) The GNSS position comprises coordinates in 2D indicating a position on Earth, and may further comprise an altitude (or height) coordinate. Since the GNSS receivers from which the GNSS measurement indications are received are stationary, a position of the stationary GNSS receiver is a practical parameter for determining a spoofing attack. A stationary (i.e. fixed and immovable) GNSS receiver at a fixed location receiver is not expected to move. Thus a deviation of the received value of the measured GNSS position from a previously measured or recorded position is a suitable indicator that the received value is erroneous. In other words, if there is a discrepancy between the recorded (e.g. historical) signal and the received signal (e.g. live signal), for example the position of the GNSS receiver, (indicating that the stationary/fixed GNSS receiver site starts "moving", which it should not), this is an indication for GNSS spoofing.

In the determination whether a GNSS measurement indication is affected by an anomaly, the measured GNSS position may be compared either with a past (earlier) GNSS measurement, e.g. stored in a measurement history to be described in more detail, of the position. Alternatively, the position record with which the received measured GNSS position value is compared may be a predetermined position value of a GNSS receiver determined e.g. at the time of bringing the GNSS receiver (or a GNSS receiver site such as a network node where the GNSS receiver is installed) into service. For example, as apposition record, a table may be stored indicating positions of the plurality of GNSS receivers (e.g. the locations of network nodes, base stations etc. where GNSS receivers are installed). Such stored position records may have been determined using GNSS (possibly including differential GPS) or different methods such as geodetic survey, or from suitable maps or geographic information system (GIS) databases.

It is thus noted that in the case that the GNSS signal parameter used in the determination of the presence of anomalies is a position, the GNSS measurement record is a position record.

It is further noted that rather than an absolute location of the GNSS receiver, a receiver location specific parameter such as a "pseudorange" or time corrected range determined from the codes received from the GNSS satellites may be used as a parameter.

Moreover, according to the present disclosure, the GNSS signal parameter used for anomaly detection is not restricted to the GNSS position. Additionally or alternatively to the position, the GNSS signal parameter may include one or more measured parameters from among a signal strength, a timing, a phase difference between signals, an angle of arrival of the GNSS signal, and/or a code carried by the GNSS signal. The anomaly determination may be made for one parameter or for a plurality of parameters.

It is noted that the absolute values of the GNSS signal parameters do not necessarily need to be known, e.g. the position of the GNSS receiver. As this information, such as a position or location of the GNSS receiver, depending on the facility where the GNSS receiver is installed, may be confidential (e.g. subject to business secret or to national security and can therefore not be shared with 3rd parties), it may be sufficient to use e.g. relative position information or encrypted position information and monitor relative changes rather than changes of absolute position values or other parameter values. Therefore, results derived e.g. from national telecommunications deployments may even be shared with an anonymous key to a central unit such as EUROCONTROL to monitor spoofing and jamming attacks across Europe (or any other multinational region) in a central location.

Therefore, the present application is not limited to one country or to different networks in one country, but it can also be used across different countries to aggregate spoofing or jamming attack detection in a centralized manner.

The plurality of stationary GNSS receivers may include GNSS receivers installed at stationary network nodes of one or more cellular wireless communications networks. In particular, the network nodes may be base stations of the cellular wireless communication network or networks.

Cellular infrastructure typically has GPS receivers built in. For instance, a base station of a wireless communication network such as 4G or 5G typically comprises a GNSS receiver, such as an integrated GNSS receiver or a GNSS antenna. These GNSS receivers are used for timing and synchronization purposes, ensuring that the base stations can accurately coordinate with each other and maintain network stability. In the time synchronization process,
the GNSS receiver processes the signals from the satellites (which are equipped with rubidium or cesium clocks) to derive the precise time. Precise synchronization is important for the seamless handoff of mobile signals between the base stations, cell towers or transmission and reception points and for maintaining the overall efficiency of the network.

However, as these GNSS receivers in the base stations are fully functioning GNSS receivers, the inventors have noted that the positioning signals, timing information and other data can also be read out on a network level.

In particular, while the cellular wireless communication networks make use of the time measurement capabilities of the GNSS receivers, it is an approach of the present disclosure to reuse the base stations of wireless cellular networks by making use of their capability of position determination.

In addition, base stations, as well as certain other network nodes, are connected to a data link (e.g. wireless connection, a data line or data cable), which enables the base stations to communicate data to a central node, such centralized or distributed server, data base or operational center implementing the anomaly detection system and performing the method of the present application.

Accordingly, by using or re-using base stations or other network nodes of a cellular wireless communication system that comprise a GNSS receiver and possibly a data link for communicating the GNSS measurement indications, the present disclosure provides for GNSS anomaly detection without the need for setting up additional infrastructure.

The network nodes such as base stations may include network nodes of a plurality of cellular wireless communication networks (or PLMNs) possibly operated by a plurality of different operators or service providers. The use of a plurality of networks within the same area or within overlapping areas of service may facilitate close meshed anomaly detection across the monitored area. In other words, combining data from multiple networks may allow for the information about detected GNSS measurement anomalies to become more reliable, refined, and accurate.

Furthermore, as mentioned above, the anomaly detection according to the present disclosure is not limited to a single country as data from networks in different countries may be shared and combined.

It is noted that in the present disclosure, the term "base stations" refers to a network nodes of a cellular system that have scheduling capabilities in the wireless communication, such as the "eNodeB" (eNB) of a LTE/4G/LTE (Long Term Evolution) system or a "gNodeB" (gNB) of a 5G New Radio system that comprises a GNSS receiver. Furthermore, as used herein "base station" may refer to locations of cell towers, transmission and reception points (TRPs) and/or antennas that are provided with a GNSS receiver.

It is further noted that GNSS receivers may be added to any other network as well, which have the capability to read, process and transmit the GPS receiver information to a central or distributed data base or operational center, where the anomaly detection of the present disclosure is performed and GPS measurements can be collected, possibly in a continuous manner.

For instance, in addition to the base stations, the GNSS receivers may include receivers integrated with additional stationary network nodes or communication devices of the cellular wireless communication system, such as stationary loT (Internet of Things) devices, provided that these nodes are stationary. The network nodes need to comprise a GPS receiver and a transmitter for wireless communication or an interface to a communication line for communicating the GNSS measurement indications. The use of these additional nodes may provide for a larger coverage and/or spatial measurement density for the anomaly detection.

As can be seen from the above, wireless communication networks such as cellular networks are a non-limiting example of an infrastructure where GNSS receivers are available. More generally, the plurality of stationary GNSS receivers used for anomaly detection may comprise GNSS receivers installed at one or more stationary network nodes of one or more types of network or system, which may comprise wireless or wired systems or combinations thereof. Exemplary networks and systems comprise:
- Cellular wireless communications networks: As described, GNSS receivers may be provided e.g. at network nodes such as base stations, TRPs, or cell towers.
- Broadcasting networks: For instance, GNSS receivers may be installed at radio towers.
- Electrical power grids: For instance, GNSS receivers may be installed at power poles and/or at wind turbines.
- Illumination systems, e.g. for public illumination: For instance GNSS receivers may be installed at streetlights.
- Traffic control systems, e.g. for vehicular traffic or railway traffic: For instance, in vehicular traffic control systems, GNSS receivers may be installed at traffic signals (e.g. traffic lights), stationary speed control or toll facilities, and/or sign holders. In railway traffic systems, GNSS receivers may be installed at signaling control facilities.
- Weather detection systems: For instance, GNSS receivers may be installed at weather stations, anemometers, wind socks, wind vanes, or at weather webcam locations.
- Radar systems: For instance, GNSS receivers may be installed at stationary radar antennas.

In addition, dedicated stationary GNSS receivers, detectors or detection systems may be installed and used, e.g. at locations in areas where the facilities of above-mentioned networks are provided at smaller densities.

Using data from GNSS receivers of different networks and sources may provide for small meshed monitoring. Furthermore, using installation locations at different heights may allow for anomaly detection at different altitudes. Furthermore, by using e.g. equipment installed at roads, such as traffic signals and streetlights, particular vulnerable infrastructure, such as vehicular traffic, may be monitored more closely.

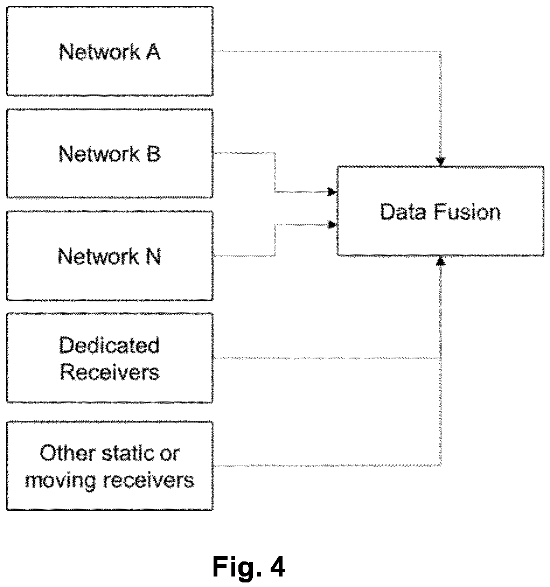

If GNSS measurement data is received from receivers of a plurality of networks and possibly from dedicated receivers and/or other receivers, data fusion may applied to make the possibly heterogeneous data from different sources usable for area wide and comprehensive monitoring. This is illustrated in **Fig. 4****.** For instance, data fusion may comprise preprocessing such as formatting. In addition, as can be seen in Fig. 4, the data from stationary receivers may be combined or fused with data from mobile receivers, e.g. from vehicles, drones or aircrafts.

In the anomaly detection of the present disclosure, GNSS signals may be monitored in a continuous and live manner. For instance, new GNSS measurement indications of the measured GNSS signal parameter value of each of the plurality of stationary GNSS receivers are received continuously at a defined update time interval. For example, the GNSS signals or indications of each and every cell site may be read out every few minutes, every minute, or even in shorter time intervals.

The GNSS measurement records may be kept and stored so that there is a history of the GNSS signal parameter value for each of the plurality of GNSS receivers (e.g. base station location). For instance, the stored measurement record may include a measurement history including a plurality of GNSS signal parameter values from a plurality of continuously performed earlier measurements measured by each of the plurality of stationary GNSS receivers.

Furthermore, the determining whether the GNSS measurement indication is affected by an anomaly may include determining, via statistical analysis, whether the measurement history includes a pattern that has been previously determined to correlate with an anomaly.

Using statistical pattern analysis as described may facilitate detection of subtle jamming or spoofing attacks e.g. before difference between a recorded parameter value and a measured parameter value exceeds a threshold. It is further noted that statistical analysis of the historical parameter data may also be used to tune or adjust the threshold values for deviations used in the anomaly detection.

For instance, machine learning techniques (e.g. artificial intelligence such as deep learning) such as neural networks may be used to identify patterns in the measurement history that are correlated with an anomaly. In the training of such machine learning or neural network processing, detection events of previously detected anomalies may be used as target value to identify and be correlated with data measured at the detection of the anomaly, which are used as input data or the machine learning. The detection events of previously detected anomalies may be taken e.g. from computer simulation of spoofing, from experimental setup and/or from historical data from the operation of an actual anomaly detection processing system.

As an example, neural networks may be trained using GNSS derived latitude, longitude, altitude and time. These GNSS data may be sampled using an edge device. The record structure may be 4-tuples of (t, lat, lon, alt), where t is a time-stamp with e.g. one-minute granularity derived from device UTC clocks synchronized to GNSS time. For training and inference, the model input tensor may comprise fixed-length, chronologically ordered windows of such tuples, where the window length is a hyper parameter (e.g. L = 10 for 10-minute windows, if the sample period is 1/min).

Further steps in the processing of the input data for neural network training may include one or more of baseline centering, sigma-scaling, handling of missing or duplicate samples, and outlier filtering for training.

In baseline centering, for each feature (latitude, longitude, altitude), the known physical set point is substracted, in order to eliminate systematic offsets and allow the network to focus on deviations. Here, "set point" refers to the known position of the GNSS receiver, as is known from a stored position record or from a measurement record of past GNSS measurement(s) (e.g. a mean value of positons from long-term GNSS measurement).

In sigma-scaling, each feature is divided by a pre-agreed tolerance, in order to bring all features to comparable numeric ranges and to allow for comparability of the mean squared errors.

Missing and duplicate samples are treated by filling gaps of short duration, marking gaps of longer duration with a mask bit and dropping the affected time windows from training. Duplicate time-stamps are averaged. The rationale behind these actions is to have one and only one value per minute for each parameter.

It is noted that data fusion or data integration of data from different sensors or receivers may require harmonizing asynchronous and partially overlapping data sets and preserving temporal resolution. For the harmonization, each sensor's (or detector's) data stream is ingested into a circular buffer of length L. The write-pointer advances exactly once per minute; a missing set of values for a minute leaves the previous value intact and sets a missing flag so that imputation or masking can take place. Furthermore, a periodic NTP (network time protocol) heartbeat per device may provide for clock skews < 300 ms, to be sufficiently below the proposed 1-min resolution.

Regarding the preservation of full temporal resolution, the system may maintain minute-level resolution by storing each minute in a dedicated, position-stable slot. Missing data may be marked rather than deleted, and the window may be realigned lazily (on-demand) at inference time instead of being resampled or averaged.

In outlier filtering, a robust z-score is performed on 24 h of seed data. Any window whose per-feature median absolute deviation exceeds 5 sigma is excluded from the normal training corpus. The rationale behind this filtering is to fit the unsupervised model on healthy behavior.

Neural network training may be performed using a training data set and a validation data set both consisting of "normal" data, i.e. data not affected by anomalies.

An exemplary set of hyperparameters for the neural network may be as follows:
- L (Window Size): 10 (length of the model input tensor, covering an exemplary maximum expected anomaly duration)
- d (Features): 3 (tuple size of tuple (latitude (lat), longitude (lon), altitude (alt)): the timestamp t is implicit in position of tuple in window)
- H (LSTM (long short term memory) hidden layer size): 64
- N (LSTM layers): 2. (It has been found that a larger depth did not improve validation loss appreciably.)
- Z (bottleneck dimension): 32. This number has been found to be small enough to force compression, and still avoids under-fit.
- Optimizer: AdamW (LR = 3 × 10⁻⁴, weight-decay = 1 × 10⁻⁴). Standard for sequence tasks; learning rate chosen by LR (learning rate) range test.
- p (drop-out): 0.2 after decoder LSTM.
- Epochs: early-stop with patience = 5; typically 18-22 epochs.
- τ (anomaly threshold): 99.5-th percentile of validation errors
- h (Hysteresis): 3 consecutive minutes. The rationale here is to suppress single-sample spikes.

Based on this statistical analysis, e.g. utilizing machine learning mechanisms to rule out small variations and discrepancies that may be caused for example by natural reasons (e.g. signal speed variation in the atmosphere), spoofing and jamming attacks can be identified in a large scale and continuous manner.

Furthermore, if historical data from the actual anomaly detection operation is used, this may allow for regularly updating and refining the anomaly detection algorithm and increase the precision of anomaly detection with the time of operation.

Moreover, in the event of an anomaly being detected, the type and nature and/or the source of the anomaly may be further investigated.

For instance, impacts, e.g. areas that are impacted by the security attack, may be localized if the network of stationary GNSS receivers is sufficiently dense. In particular, if it is determined that one or more stationary GNSS receivers among the plurality of stationary GNSS receivers are affected by an anomaly, an area affected by the anomaly may be localized based on the position records or position information or recorded position information in the stored GNSS measurement or position record of the GNSS receivers. Alternatively or additionally, the measured signal parameter values (e.g. signal strength, timing, angle of arrival) may be used localize the affected area and/or the source of the anomaly.

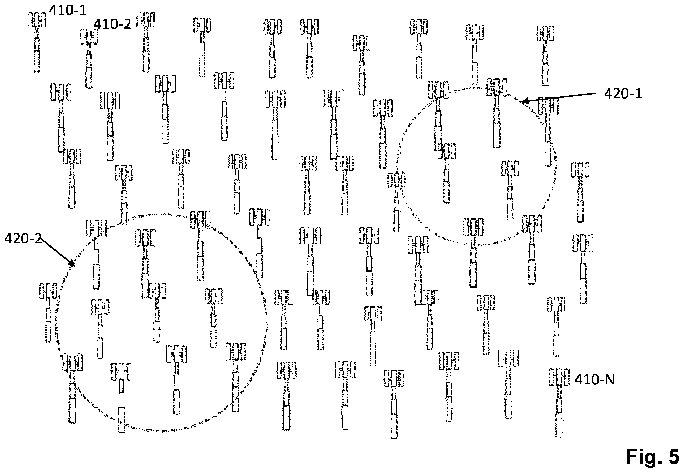

For instance, as shown in Fig. 5, if a plurality of neighboring stationary GNSS receivers, here exemplified as base station locations 410-1, 410-2 to 410-N are affected by an anomaly, an area 420-1, 420-2 affected by an anomaly may be determined to encompass the affected neighboring base station locations. Furthermore, a source of the anomaly may be estimated to be located in a center location within the determined area. The determination of the location and boundaries of the affected area, as well as of the source of the anomaly, may further be refined using measured GNSS signal parameter values, e.g. by comparing a signal strength at different GNSS receiver locations, evaluating a timing, phase difference, or angle of arrival, etc.

In addition to storing a GNSS measurement record such as a position record, for each of the plurality of stationary GNSS receivers, an attribute record may be stored that indicates the stationary GNSS receiver as being stationary.

For instance in the case of the GNSS receivers being installed at base station locations of a cellular network, the attribute record may distinguish stationary base stations (fixed base stations installed at a specific site) from "moving base stations" (e.g. moving balloons or airships or satellites of a non-terrestrial network serving as base stations). Accordingly, by identifying the cell type or GNSS receiver location type e.g. as "stationary" or "non-stationary" / "moving" and thus select the GNSS receivers to be included in the anomaly detection determination.

With the GNSS position discrepancy being identified, and possibly additional processing being applied to make sure there is no false alarm, other systems that may be impacted by potential GPS spoofing can automatically be notified.

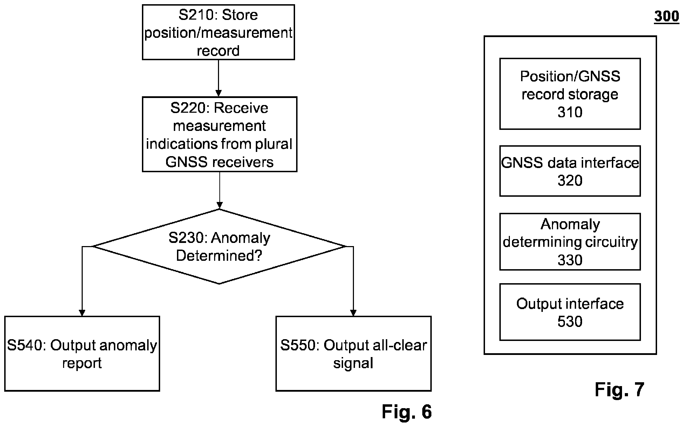

For instance, if an anomaly is detected, a report may be output on the detected anomaly. As shown in **Fig. 6****,** the anomaly detection method of the present disclosure may comprise, if an anomaly is detected in step S230, a step S540 of outputting an anomaly report. For the reporting of reports, the anomaly detection system may comprise an output interface 530 as shown in **Fig. 7****.** For instance, the interface may be an automated interface that is configured to provide reports such as "live updates" and "alerts" or "alarms". The output interface may be a wired interface or a wireless interface.

The anomaly report may indicate, for example, the anomaly detection event, a GNSS receiver or GNSS receiver locations affected by the anomaly, and an area affected by the anomaly determined. Further, a location of an estimated source of the anomaly may be reported to facilitate localization of the source of anomaly, e.g. an interfering transmitter or jamming transmitter involved in a spoofing or jamming attack, and to arrange for mitigation, e.g. removal of the source of the anomaly. Moreover, based on a size of the area affected by the anomaly or based on other parameters such as a signal strength, a "level of risk" may be determined and output.

Moreover, if no anomaly is detected within a coverage area of anomaly detection (such as a coverage area of a wireless cellular communication network) or in a subset thereof, a signal may be output that indicates that no anomaly has been detected in the coverage area or its subset. Such a signal may be called an "all-clear signal", as shown in step S550 of **Fig. 6****.** Provided a sufficient spatial density of the stationary GNSS receivers from which GNSS measurement indications are received and evaluated, the all-clear (or differently named) signal signal) may inform its recipient or recipients that they can trust the GNSS information they are receiving.

A field of application of the anomaly detection of the present application includes, as a safety critical system, Air Traffic Control, which depends on GNSS signals. For instance, the interface 530, on which the report is output, may be an interface to an aviation control node of crewed or uncrewed aviation.

Accordingly, alarms can be given to make sure that safety critical systems (such as Air Traffic Control) are aware that there is a Spoofing attack and the provided signals cannot be trusted.

Possible recipients of the reports (such as alarm or alert, "level of risk", or an all-clear signal) may include systems that have a central data base that provides "trustworthy" data. An example for such systems is the aviation systems across Europe. All of them have, as an example of the above-mentioned aviation control node, a national and central data center called FIMS (Flight Information Management System) or a CISP (Central Information Service Platform) or equivalent, which is typically provided by an ANSP - Air Navigation Service Provider, responsible for airspace safety. Any problem with airspace safety is controlled within such systems. This is the case for both traditional, crewed (manned) aviation and uncrewed (unmanned) aviation operating "drones" (uncrewed aerial vehicles, UAVs).

Similarly, central management systems for example other systems relying on GNSS data, for instance autonomous trucks, cars, robots, boats, trains, etc., may receive reports on anomaly detection. Such management systems may for instance subscribe to such a service and receive live updates on GPS spoofing attacks. In addition, reports on anomaly detection may be made available to users of navigational applications or other GNSS based applications, who may thereby be informed whether the GNSS signal they are using is reliable.

It is noted that anomaly reporting of the present disclosure is not limited to dedicated reports for the location or the surrounding area of the location where an anomaly has been detected.

Using GNSS measurements from a plurality of receivers distributed across a monitored area may provide for area-wide monitoring and anomaly detection. Furthermore, by continuously receiving results of GNSS measurements from receivers installed across the entire area, a live overview of the situation can be generated that provides situational awareness for the entire monitored area.

For instance, the area monitored for anomalies may be divided into a plurality of sub-areas. An area or areas affected by an anomaly may then be determined and reported in units of the sub-areas.

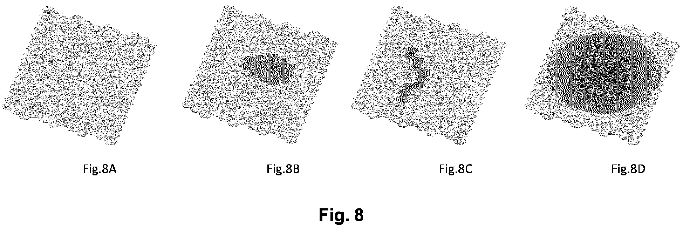

To account for comprehensive monitoring without gaps, the monitoring area may be divided by regular tiling into equal-sized polygons that cover the entire area, such as squares, triangles, or - as shown in **Figs. 8A-D** - hexagonal tiling.

As described, anomalies are reported with respect to sub-areas of the monitoring area rather than with respect to particular detectors. This allows for the provision of a situational overview as the user or operator of a system susceptible for jamming or spoofing attacks is typically not interested in the locations of individual sensors. Furthermore, such sensor locations may be confidential. Moreover, one or more GNSS sensors may be provided within one sub-area (e.g. hexagon), possibly belonging to the same or different networks. In such a scenario, data fusion of measurement data from a plurality of sensors may be applied per sub-area (e.g. per hexagon).

It is noted that the data fusion or data integration of data from different sensors or receivers for a sub-area may require harmonizing asynchronous and partially overlapping data sets and preserving temporal resolution. Similar data processing may be performed as described above for the training data.

With the division of the monitored area into sub-areas, the anomaly report may be provided with respect to the entire area. For instance, for each of the plurality of sub-areas, an indication may be output whether the subarea is affected by an anomaly. Such an indication may be provided in the form of a (digital) map of the monitored area, wherein each sub-area is indicated as being affected being an anomaly or not being affected by an anomaly that has been detected by GNSS receivers within that sub-area. For a digital map, the presence or absence of an anomaly may be indicated as an attribute of the sub-area, and in a visualization of the map, different colors or shading may be used to indicate whether or not a sub-area is indicated by an anomaly. Such a map indicating which areas are affected by anomalies provides situational awareness and facilitates decision-making in live control and monitoring of a traffic system, aviation system or other at least partially automated system relying on GNSS positioning data.

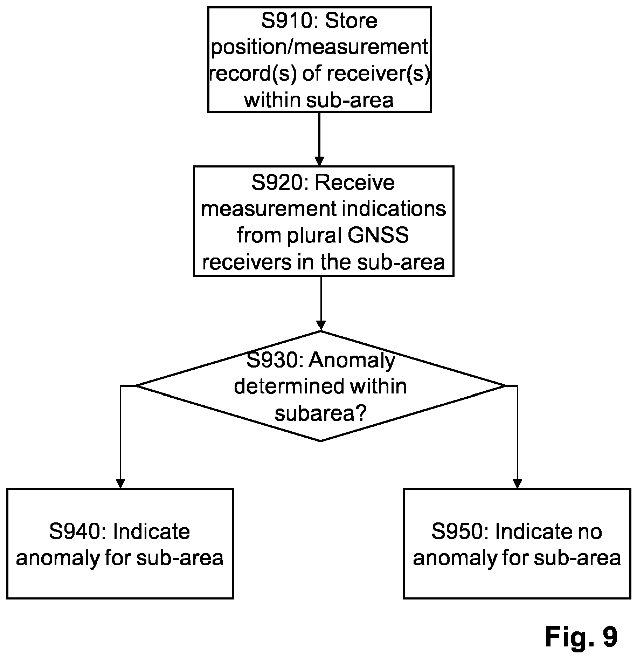

Method steps for an anomaly detection and reporting method for a sub-area are shown in **Fig. 9****.** Steps S910 to S930 correspond to steps S210 to S230 shown in Fig. 6. In Fig. 9, these steps of anomaly detection are shown for a sub-area. If, in step S930, an anomaly is detected in the sub-area, the anomaly is indicated for the sub-area. If no anomaly is determined in the sub-area, step S950 of indicating no anomaly for the sub-area is performed. The indication that no anomaly is an example of an "all-clear"-like signal or all clear signal for a sub-area where no anomaly has been detected.

As an alternative, or in addition to a binary distinction between sub-areas affected by anomaly and sub-areas for which no anomaly has been determined, the anomaly indication may also be provided as a level of risk that is determined and indicated and/or output for each sub-area. For instance, a level of risk may be an integer value indicating a severity and/or an extent of an anomaly. For instance, the level of risk may be based on one or more out of:
- a number of anomalies detected per sub-area or frequency of anomaly detection per time interval. Since the number of stationary GNSS receivers per sub-area may vary among the different sub-areas, the number of anomalies detected per sub-area may be normed by the number of GNSS receivers in the sub-area and provided as an "anomaly density", percentage or ratio.
- a number of (different) GNSS receivers per sub-area and per time interval where the anomaly has been detected. This number may also be normed by the number of GNSS receivers per sub-area and provided as an "anomaly density", percentage or ratio. Depending on the parameterization of the anomaly detection algorithm and on the time interval, the number of GNSS receivers where the anomaly has been detected may be the same as the aforementioned number of anomalies detected.
- a value of the GNSS signal parameter. For instance, the stronger the deviation of the currently measured GNSS position from the recorded position of the receiver, the greater the level of risk. Adjacent sub-areas may comprise horizontally adjacent sub-areas as well as sub-areas on different altitude sub-ranges (to be described further) covering the same position on earth.
- a number of adjacent sub-areas affected by anomaly, as an indicator of a magnitude or severity of an anomaly (see Fig. 8B).
- a gradient of the GNSS signal parameter. The "gradient" refers to an intensity profile of an anomaly or disturbance of a measured parameter across neighboring GNSS receivers and/or across neighboring cells. The gradient may be a characteristic of a cause of the anomaly. For instance, Fig. 8D shows a profile of a disturbance, where the contour cannot be sharply defined. Such a profile is characteristic for disturbances or anomalies caused by solar activities such as a "solar storm" (or geomagnetic storm).

It may be further determined whether an anomaly is moving, e.g. through analysis of the development of anomalies in time. For instance, when the area affected by the anomaly consecutively shifts or grows from one sub-area to an adjacent sub-area along a line or path, it is determined that an anomaly (and/or a source of an anomaly) is moving. The anomaly may shift or grow in time along a plurality of connected sub-areas along a path from one sub-area to a respectively adjacent sub-area. As shown in Fig. 8C, the path of moving anomaly can be tracked and/or indicated on a map.

For instance, the determining and tracking of moving anomalies may be particularly useful for determining the presence of a moving jammer or spoofer, e.g. on board of a moving vehicle, a train or a ship. The detection of moving jammers or spoofers, e.g. on roads or railways, may be facilitated by using a dense network of GNSS receivers installed along a road or railway line, e.g. using GNSS receivers installed at traffic control systems and/or illumination systems. For such a use case and scenario, the area monitored for anomalies may be a road network instead of a two-dimensionally coherent area.

As described above, the two-dimensional area monitored for anomalies, corresponding to a spatial (horizontal) extension of the area covered by the monitored airspace, may be divided into a regular pattern of sub-ranges. In addition, an altitude range, corresponding to a height (vertical) dimension of the monitored airspace, may also be divided into a plurality of altitude subranges corresponding to different height levels. The area monitored for anomalies may be divided into a plurality of sub-areas per altitude-subrange, i.e. within each of the plurality of altitude sub-ranges. If an anomaly is detected, a sub-area corresponding to one altitude range within which the detector reporting the anomaly is located, from among the plurality of altitude ranges, is determined as the area affected by the anomaly. In other words, the airspace monitored for anomalies may be divided into a plurality of sub-spaces, each sub-space being a combination of a horizontal two-dimensional sub-area and an altitude sub-range. For stationary GNSS receivers, the altitude (or height) of the anomaly and, the resulting altitude subrange to which the height belongs, may be determined using a recorded height stored in a position record or measurement record for the affected GNSS receiver.

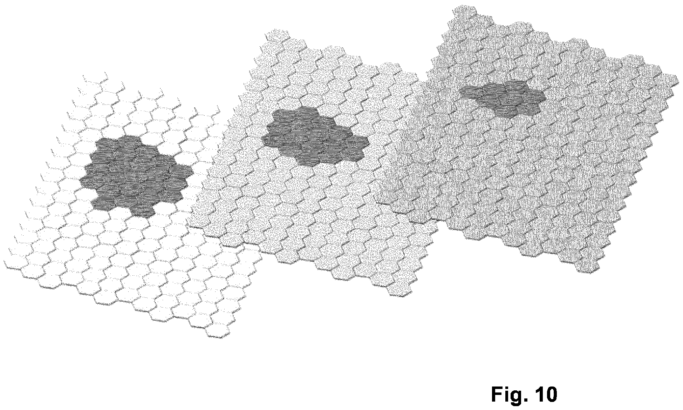

An example of a division of the monitored area into sub-ranges by hexagonal tiling within each of a plurality of altitude subranges is illustrated in Fig. 10. However, it is noted that sub-areas corresponding to different altitude sub-ranges do not necessarily have the same sizes, as they may be adapted to the density of GNSS receivers available on different altitude sub-ranges and/or the anomaly detection mechanism applied on different altitudes, to be described further. For instance, the size on the sub-area may depend on the corresponding altitude sub-range, and may be smaller (i.e. having a higher resolution) for the lower altitude ranges (that are closer to the ground) and larger for the higher altitude sub-ranges (having a lower resolution) for the higher altitude sub-ranges.

As has been described above, GNSS receivers may be installed at different heights, depending e.g. on the network and corresponding infrastructure where they are installed (e.g. streetlights, traffic signals, cellular network TRPs, power poles, wind turbines, etc). In addition, anomaly detection using these stationary GNSS receivers may be combined with anomaly detection using moving GNSS receivers.

For instance, a plurality of GNSS receivers used for anomaly detection may comprise the aforementioned plurality of stationary GNSS receivers as well as a plurality of moving GNSS receivers. For instance, moving GNSS receivers may be placed on board of aircrafts, drones (or UAVs), helicopters, balloons, or satellites. In addition to or instead of vehicles using the airway, these aerial vehicles may include dedicated aerial vehicles equipped with GNSS receivers, such as test drones and/or test balloons.

For the moving GNSS receivers, it is determined based on the presence or absence of irregularities detected in GNSS measurement indications of GNSS measurements performed by the mobile GNSS receivers, whether the moving GNSS receiver is affected by an anomaly.

For instance, aerial vehicles such as aircrafts regularly report their measured GNSS signals (e.g. their measured position), e.g. using techniques such as ADS-B (Automatic Dependent Surveillance-Broadcast). An anomaly in a GNSS signal is detected, for instance, by the detection of sudden position jumps that indicate unrealistic or false GPS coordinates being injected into an aircraft's navigation system, e.g. due to spoofing. For instance, if an aircraft that is supposed to be moving repeatedly reports the same position, or if a plurality of aircrafts simultaneously report identical coordinates as their positions, these detection events are indicators for spoofing. Furthermore, jamming may be detected in a manner similar to the detection for stationary GNSS receivers, e.g. by detecting whether a GNSS measurement indication is not received at a configured timing or whether the measured GNSS signal parameter value is invalid.

Since a jammed or spoofed GNSS signal cannot be assumed to be reliable, it needs to be decided how a position of a spoofed or jammed aircraft or other aerial vehicle is to be recorded and to which sub-area and altitude range the spoofing or jamming incident is to be assigned, or which sub-area in which altitude range is to be determined as the sub-area affected by the anomaly. One possibility is to choose the last set of coordinates or position reported from the affected aerial vehicle for which no spoofing or jamming has yet been determined. Another possibility is to supplement the GNSS data from the aerial vehicles with data from ground-based radar, if available, and indicate the position determined by ground-based radar for a spoofed or jammed aerial vehicle.

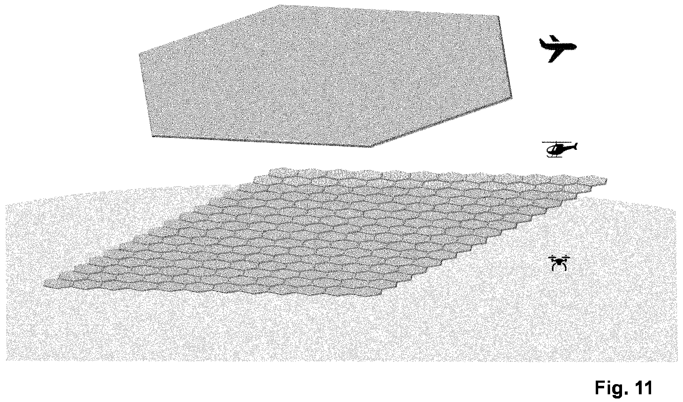

As mentioned above the size of the two-dimensional sub-areas may depend on the corresponding altitude (sub-)range. If mobile sources of GNSS data are processed in addition to stationary GNSS receivers, the size of sub-areas at an altitude sub-range corresponding to cruising altitude (e.g. higher than 300 m, or typically between 1500 m and 6500 m, or higher) may be chosen to be larger than the size of sub-areas at altitude sub-ranges corresponding to ground level or adjacent altitude sub-ranges (e.g. 0 to 300 m). An example is illustrated in Fig. 11. The choice of larger sub-area sizes may account for the possibly lower accuracy of localization of anomalies at larger altitudes, e.g. due to the applied anomaly detection technique and due to the event-based nature of anomaly detection relying on moving sources of GNSS data.

As an example, a sub-area for an altitude sub-range near ground-level (e.g. 0 to 300 m) may be a hexagon with edges having lengths of approximately 3km, and a sub-area for an altitude sub-range comprising cruising altitude (e.g. 300 m to 6500 m, or 100 m to 6500 m) may be a hexagon with edges having lengths of approximately 70 km to 100 km. Furthermore, while the sub-areas per altitude sub-range may have the same size, the sizes of the altitude sub-ranges themselves may vary and depend e.g. on the technique used for anomaly detection (e.g. monitoring of stationary GNSS receivers vs. event-based (e.g. ADB-S) monitoring of moving GNSS receivers / event based monitoring).

However, it is noted that the two altitude-subranges shown in Fig. 11 are merely an example. There may be a larger number of altitude sub-ranges, possibly comprising intermediate altitude sub-ranges. For instance, the region near the ground level may further be subdivided into a lower altitude sub-range from 0m to 50 m (comprising GNSS detectors installed at traffic infrastructure, telecommunication base stations, etc.) and an altitude sub-range from 50 m to 300 m or 500 m (comprising e.g. GNSS receivers installed at radio towers of wind turbines).

It is also noted that the area monitored for anomalies may be different at different altitude subranges, depending on the availability or density of installed GNSS receivers or GNSS data. For instance, in mountain regions, there may be a lower density of stationary GNSS receivers, while flight routes may be guided across such regions.

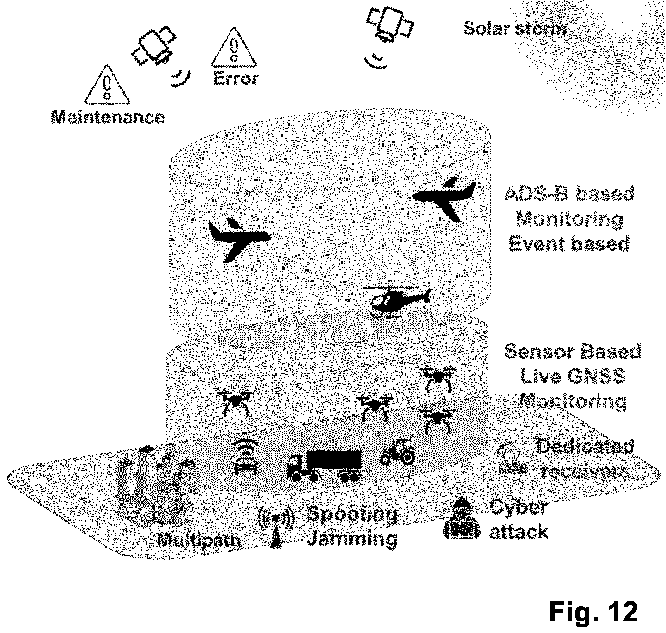

As it is desirable to support situational awareness for the control and monitoring of various systems relying on GNSS technology, it is an approach of the present disclosure to combine different techniques for anomaly detection, including live GNSS monitoring based on stationary GNSS receivers of wireless or wired networks as well as dedicated receivers installed for the purpose of anomaly detection, as well as event-based monitoring based on moving GNSS receivers that may be monitored e.g. using ADS-B. A schematic overview of the different monitoring techniques is shown in Fig. 12, which illustrates the distinction between event based monitoring and live monitoring based on GNSS sensors or receivers from which GNSS data is continuously available. As is further shown in Fig. 12, in addition to the aforementioned spoofing and jamming attacks as well as solar storms, GNSS anomalies may also be caused by maintenance or errors in the GNSS system, which may be reflected by missing or incorrect signals. Moreover, in addition to jamming and spoofing using radio devices, anomalies may also result from cyber attacks where the GNSS receivers connected to the internet or similar network may receive be maliciously programmed or controlled to report erroneous signals or false positions. Furthermore, as indicated in Fig. 12, determination of GNSS may distinguish between patterns of deviation caused by jamming/spoofing and patterns of deviation caused by multipath propagation, as may occur e.g. in urban areas where the satellite signal may be reflected from buildings etc. Deviation patterns known to the anomaly detection system e.g. through neural network learning using appropriate training data representative of multipath deviation.

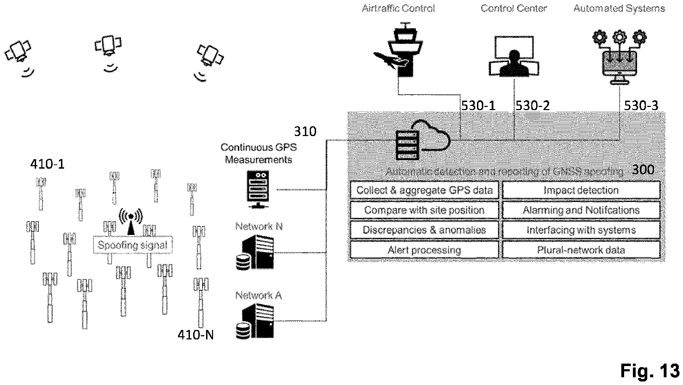

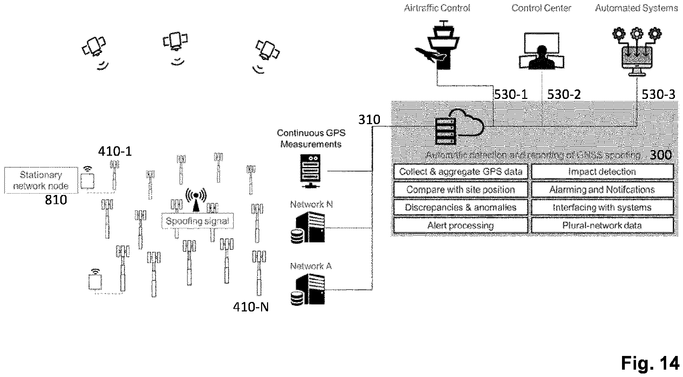

Fig. 13 illustrates an exemplary GNSS anomaly detection system 300 in accordance with the present disclosure. Via a GNSS data input interface, the system continuously receives measured GNSS data from a plurality of cellular wireless communication networks A to N with base stations 410-1 to 410-N and determines whether the received data indicates anomalies in the GNSS. Reports on detected anomalies are provided and/or possibly all-clear signals, are provided via interface 530-1 to 530-3, to systems such as (crewed or uncrewed) air traffic control, to automated systems, or more generally, control centers of (possibly) automated systems. **In** **Fig. 14****,** in addition to base stations 410-1 to 410-N, an additional stationary network node 810 comprising a GNSS receiver is provided to enhance the coverage density of GNSS anomaly monitoring, which may be a stationary loT device.

As described herein, the present disclosure provides an approach to GNSS anomaly detection approach that allows for practical and cost-efficient implementation. In particular, when network nodes of an existing cellular wireless communication network with built-in GNSS receivers, or other existing network infrastructure of other types of network, are used or re-used for GNSS anomaly detection, no dedicated hardware or software for each GNSS receiver is required to detect spoofing, and laborious signal processing at the individual GPS receivers is not required. The results of anomaly detection may be shared with applications of standard GNSS applications as well as differential GPS.

Moreover, with a sufficient density of GNSS receivers continuously providing GNSS measurement indications, the proposed anomaly detection provides a live insight into the scale of the spoofing attack.

For instance, cellular networks are built out in an increasingly dense architecture, with inter-site distances from several 100 meters in urban and sub-urban type environments, to several kilometers in rural type environments.

In addition, cellular networks are continuously operating (e.g. "always on") and therefore technology for detection of GNSS anomalies (spoofing or jamming) is available all the time. Moreover, the continuous operation may reduce the risk of failing to detect scenario where a spoofing signal is already present at the time instance when the GNSS receiver used for spoofing detection starts operation.

Further, due to the continuous operation, information may be provided to report that an attack is over (e.g. in the form of the above-described all-clear signal). This may facilitate reducing the downtime for any system relying on accurate and reliable GPS systems.

Consequently, collecting continuous GNSS positioning, timing and other data from each cell site in a mobile network allows for a cost effective and at the same time spatially dense and time-continuous monitoring of GNSS signals in a sensor network that already exists.

To give an example of the density of the networks an even distribution of base stations over the entire area is assumed in the following. For instance, in Germany, it is assumed that there are about 70.000 cell sites divided among three telecommunications providers, distributed over an area of about 357.000km². Regarding the base stations of a single wireless cellular network, a GNSS sensor network has a grid size (average inter-site distance of cell towers) of about 4km. Utilizing all cells from all networks, one obtains grid size or raster of about 2 km to 2.5 km average distance between base stations for the sensor network. Similar rough average inter-size distances (based on the assumption of evenly distributed spacing of base station locations) may also be obtained in for other countries, e.g. about 2.7km in the Netherlands, about 2.5 km in Austria, about 5.5km in Estonia, and, as a rough approximation, about 4.8 km for the whole area of the states of the European Union.

Moreover, with a dense network of GNSS receivers, the proposed anomaly detection techniques may immediately identify which areas are impacted and further localize an area or location of a source where the attack is coming from.

In addition, the proposed system allows a direct and automated interaction with the control systems and centers that rely on accurate and reliable GPS systems, e.g. Air Traffic Control, other control centers and automated systems. It is applicable to any application depending on precise Positioning, Navigation and Timing (PNT) from GNSS / GPS type systems, including systems in the air, on the ground, or in water, e.g. in shipping ports. A centralized information service on GNSS spoofing and jamming can be provided, either per country or for entire regions e.g. managed by entities such as EUROCONTROL in Europe.

Therefore, in short, cellular communication networks provide dense sensor network that may have GPS receivers already built in (and thus do not require additional hardware investment) and that that are continuously operating, and that can provide live data and transmit the data to a central data base or operations center (per network, per country, equivalent, or even to a larger aggregation, for example to EUROCONTROL handling the flight management and safety information across Europe).

As described herein, anomaly detection is performed for a plurality of stationary GNSS receivers. Such anomaly detection may be performed in a centralized manner, by collecting the data from the plurality of GNSS receivers and performing the anomaly detection processing at a centralized processing node. However, it is noted that according to the present disclosure, the anomaly detection processing of determining, for each of the plurality of GNSS receivers, whether a GNSS measurement indication is affected by an anomaly, may be performed locally at the respective GNSS receiver sites.

For instance, at each of a plurality of stationary GNSS receiver sites (e.g. network nodes or base stations of a cellular wireless communication system), the following method for detecting position measurement anomalies in a global navigation satellite system may be performed, which comprises the steps of: storing a position record indicating a recorded position of the stationary GNSS receiver or a GNSS measurement record indicating a recorded GNSS signal parameter value from a past measurement by the stationary GNSS receiver; receiving an indication of a measured GNSS position measured by the GNSS receiver; and determining whether the measured GNSS position is affected by an anomaly, wherein the GNSS measurement indication is determined to be affected by an anomaly if the GNSS measurement indication is not received at a configured timing, if the measured GNSS signal parameter value is invalid or deviates from the recorded position or from the recorded GNSS signal parameter value.

If an anomaly is detected, it may then be reported to a central node together with an identifier of the GNSS receiver location, where anomaly reports may be generated and output.

In summary, according to an aspect of the present disclosure, provided is an anomaly detection method for detecting position measurement anomalies in a global navigation satellite system, GNSS. The anomaly detection method comprises steps of: storing, for each of a plurality of stationary GNSS receivers, a position record indicating a recorded position of the stationary GNSS receiver or a GNSS measurement record indicating a recorded GNSS signal parameter value from a past measurement by the stationary GNSS receiver; receiving, from each of the plurality of stationary GNSS receivers, a GNSS measurement indication, the GNSS measurement indication indicating a measured GNSS signal parameter value measured by the stationary GNSS receiver; and determining, for each of the plurality of stationary GNSS receivers, whether the GNSS measurement indication is affected by an anomaly. The GNSS measurement indication is determined to be affected by an anomaly if the GNSS measurement indication is not received at a configured timing, if the measured GNSS signal parameter value is invalid or deviates from the recorded position or from the GNSS measurement record.

This facilitates area-wide identification of GNSS measurement anomalies such as spoofing or jamming.

In some embodiments, the (recorded and measured) GNSS signal parameter value includes a value of the GNSS position.

This facilitates a practical identification of GNSS anomalies as stationary GNSS receivers are not supposed to change their location.

In some embodiments, the GNSS signal parameter value includes of one or more measured parameters from among a signal strength, a timing, a phase difference between signals, an angle of arrival of the GNSS signal, and/or a code carried by the GNSS signal.

This facilitates refinement of GNSS anomaly detection by choosing a suitable parameter to be examined.

In some embodiments, the plurality of stationary GNSS receivers comprise GNSS receivers installed at stationary network nodes of one or more networks from among:
- cellular wireless communications networks,
- broadcasting networks,
- electrical power grids,
- illumination systems,
- traffic control systems,
- weather detection systems, and/or
- radar systems.

This facilitates refinement of GNSS anomaly detection by choosing a suitable parameter to be examined.

In some embodiments, the plurality of stationary GNSS receivers include GNSS receivers installed at stationary network nodes of one or more cellular wireless communications networks. The stationary network nodes may include base stations of the one or more cellular wireless communication networks.

This facilitates cost-efficient, area-wide, and continuous monitoring of the GNSS by reusing the communication infrastructure.

In some embodiments, the method comprises, if it is determined that one or more stationary GNSS receivers among the plurality of stationary GNSS receivers are affected by an anomaly, localizing an area affected by the anomaly and/or a source of the anomaly based on position records of the one or more stationary GNSS receivers affected by the anomaly and/or based on the measured signal parameter value.

This facilitates area-specific indication of GNSS measurement anomalies and containment or localization of a source of an anomaly (e.g. a transmitter emitting a spoofing signal).

In some embodiments, new GNSS measurement indications of the measured GNSS position of each of the plurality of stationary GNSS receivers are received continuously at a defined update time interval.

This facilitates continuous anomaly detection possibly covering a beginning and an ending of an attack.

In some embodiments, the GNSS measurement record includes a measurement history including a plurality of GNSS signal parameter values from a plurality of continuously performed earlier measurements, and the determining whether the GNSS measurement indication is affected by an anomaly includes determining, via statistical analysis, whether the measurement history includes a pattern that has been previously determined to correlate with an anomaly.

This facilitates precise and adaptive identification characteristic features of signals corresponding to anomalies.

In some embodiments, the method comprises storing, for each of the plurality of stationary GNSS receivers, an attribute record indicating the stationary GNSS receiver as being stationary.

This facilitates identifying stationary GNSS receivers (e.g. at base stations) as being suitable for anomaly detection of the present disclosure.

In some embodiments, the method comprises outputting a report on a detected anomaly.

This facilitates issuance of warnings about anomalies to systems depending on GNSS positioning.

In some embodiments, the report is output via an interface to an aviation control node of crewed or uncrewed aviation.

This facilitates supplying security relevant data to aviation systems.

In some embodiments, an area monitored for anomalies is divided into a plurality of sub-areas, and the area affected by the anomaly is determined in units of the sub-areas.

In some embodiments, an altitude range monitored for anomalies is divided into a plurality of altitude sub-ranges, the area monitored for anomalies is divided into the plurality of sub-areas for each of the plurality of altitude sub-ranges, and a sub-area corresponding to one of the plurality of altitude sub-ranges is determined as the area affected by the anomaly.

In some embodiments, the size of the sub-area depends on the corresponding altitude sub-range.

In some embodiments, the method comprises outputting, for each of the plurality of sub-areas, an indication whether the sub-area is affected by the anomaly.

In some embodiments, the method comprises the method comprises determining, for each of the plurality of sub-areas, a level of risk; and indicating or outputting the level of risk for each of the plurality of sub-areas, wherein the level of risk is determined based on one or more out of a number of anomalies detected per sub-area, a number of GNSS receivers per sub-area where the anomaly has been detected, a value of the GNSS signal parameter, a gradient of the GNSS signal parameter, and/or a number of adjacent sub-areas affected by anomaly.

In some embodiments, the method comprises determining that the anomaly is moving when it is determined that the area affected by the anomaly consecutively shifts or grows from one sub-area to an adjacent sub-area.

In some embodiments, a plurality of GNSS receivers comprises said plurality of stationary GNSS receivers and a plurality of moving GNSS receivers, and the method comprises determining, for each of the plurality of moving GNSS receivers, based on the presence or absence of irregularities detected in GNSS measurement indications of GNSS measurements performed by the moving GNSS receiver whether the moving GNSS receiver is affected by an anomaly.

In some embodiments, the method comprises determining, based on a size of the area affected by the anomaly, a level of risk, and outputting, via an interface to an aviation control node of crewed or uncrewed aviation, a report on a detected anomaly, the report including the indication of the level of risk.

This facilitates supplying security relevant data to aviation systems and enabling efficient operation of the aviation systems.

In some embodiments, the method includes, if no anomaly is detected within a coverage area of anomaly detection or a sub-area or partial area of the coverage area, outputting an all-clear signal.

This facilitates enabling efficient operation of the aviation systems.

According to another aspect, provided is an anomaly detection system for detecting position measurement anomalies in a global navigation satellite system, GNSS, the anomaly detection system comprising: a storage configured to store, for each of a plurality of stationary GNSS receivers, a position record indicating a recorded position of the stationary GNSS receiver or a GNSS measurement record indicating a recorded GNSS signal parameter value from a past measurement by the stationary GNSS receiver; a data interface configured to receive, from each of the plurality of stationary GNSS receivers, a GNSS measurement indication indicating a measured GNSS signal parameter value measured by the stationary GNSS receiver; and processing circuitry configured to determine, for each of the plurality of stationary GNSS receivers, whether the GNSS measurement indication is affected by an anomaly, wherein the processing circuitry is configured to determine that the measured GNSS measurement indication is affected by an anomaly if the GNSS measurement indication is not received at a configured timing or if the measured GNSS signal parameter value is invalid or deviates from the recorded position or from the GNSS measurement record.

The anomaly detection system may be provided in embodiments corresponding to the above-described embodiments of the anomaly detection methods.

According to a further aspect, provided is a computer program comprising instructions which, when the program is executed by a computer, cause the computer to carry out the anomaly detection method of the present disclosure.

According to yet a further aspect, provided is a non-transitory computer-readable storage medium having stored thereon instructions to cause processing circuitry of a computer to carry out the anomaly detection method of the present disclosure.

Summarizing, provided are a method and a system for detecting position measurement anomalies in a global navigation satellite system (GNSS) for a plurality of stationary GNSS receivers. Therein, GNSS measurement indication from a GNSS receiver is determined to be affected by an anomaly if the GNSS measurement indication is not received at a configured timing, if the measured GNSS signal parameter value is invalid or deviates from a recorded position of the GNSS receiver or from a recorded GNSS signal parameter value from a past measurement by the stationary GNSS receiver. Accordingly, the present disclosure facilitates cost efficient, area-wide, high-resolution, and continuous monitoring of GNSS anomalies (such as spoofing or jamming attacks).

## Claims

1. An anomaly detection method for detecting position measurement anomalies in a global navigation satellite system, GNSS, the anomaly detection method comprising:
storing, for each of a plurality of stationary GNSS receivers, a position record indicating a recorded position of the stationary GNSS receiver or a GNSS measurement record indicating a recorded GNSS signal parameter value from a past measurement by the stationary GNSS receiver;
receiving, from each of the plurality of stationary GNSS receivers, a GNSS measurement indication, the GNSS measurement indication indicating a measured GNSS signal parameter value measured by the stationary GNSS receiver; and
determining, for each of the plurality of stationary GNSS receivers, whether the GNSS measurement indication is affected by an anomaly,
wherein the GNSS measurement indication is determined to be affected by an anomaly if the GNSS measurement indication is not received at a configured timing, if the measured GNSS signal parameter value is invalid or deviates from the recorded position or from the recorded GNSS signal parameter value,
wherein the method comprises, if it is determined that one or more stationary GNSS receivers among the plurality of stationary GNSS receivers are affected by an anomaly, localizing an area affected by the anomaly and/or a source of the anomaly based on position records of the one or more stationary GNSS receivers affected by the anomaly and/or based on the measured signal parameter value.

2. The anomaly detection method according to claim 1, wherein the GNSS signal parameter value comprises a value of the GNSS position.

3. The anomaly detection method according to claim 1 or 2, wherein the plurality of stationary GNSS receivers comprise GNSS receivers installed at stationary network nodes of one or more cellular wireless communications networks

4. The anomaly detection method according to any one of claims 1 to 3, wherein the plurality of stationary GNSS receivers comprise GNSS receivers installed at stationary network nodes of one or more networks from among:
• cellular wireless communications networks,
• broadcasting networks,
• electrical power grids,
• illumination systems,
• traffic control systems,
• weather detection systems, and/or
• radar systems.

5. The anomaly detection method according to claim 3 or **4,** wherein the stationary network nodes comprise base stations of the one or more cellular wireless communication networks.

6. The anomaly detection method according to any one of claims 1 to 5, wherein new GNSS measurement indications of the measured GNSS signal parameter value of each of the plurality of stationary GNSS receivers are received continuously at a defined update time interval.

7. The anomaly detection method according to any one of claims 1 to 6, wherein the GNSS measurement record comprises a measurement history including a plurality of GNSS signal parameter values from a plurality of continuously performed earlier measurements, and the determining whether the GNSS measurement indication is affected by an anomaly comprises determining, via statistical analysis, whether the measurement history comprises a pattern that has been previously determined to correlate with an anomaly.

8. The anomaly detection method according to any one of claims 1 to 7, wherein an area monitored for anomalies is divided into a plurality of sub-areas, and the area affected by the anomaly is determined in units of the sub-areas.

9. The anomaly detection method according to claim 8, wherein an altitude range monitored for anomalies is divided into a plurality of altitude sub-ranges, the area monitored for anomalies is divided into the plurality of sub-areas for each of the plurality of altitude sub-ranges, and a sub-area corresponding to one of the plurality of altitude sub-ranges is determined as the area affected by the anomaly.

10. The anomaly detection method according to claim 9, wherein the size of the sub-area depends on the corresponding altitude sub-range.

11. The anomaly detection method according to any one of claims 8 to 10, wherein the method comprises outputting, for each of the plurality of sub-areas, an indication whether the sub-area is affected by the anomaly.

12. The anomaly detection method according to any one of claims 8 to 11, wherein the method comprises:
determining, for each of the plurality of sub-areas, a level of risk; and
indicating or outputting the level of risk for each of the plurality of sub-areas,
wherein the level of risk is determined based on one or more out of a number of anomalies detected per sub-area, a number of GNSS receivers per sub-area where the anomaly has been detected, a value of the GNSS signal parameter, a gradient of the GNSS signal parameter, and/or a number of adjacent sub-areas affected by anomaly.

13. The anomaly detection method according to claim 8 to 12, wherein the method comprises:
determining that the anomaly is moving when it is determined that the area affected by the anomaly consecutively shifts or grows from one sub-area to an adjacent sub-area.

14. The anomaly detection method according to any one of claims 1 to 13, wherein a plurality of GNSS receivers comprises said plurality of stationary GNSS receivers and a plurality of moving GNSS receivers, and the method comprises:
determining, for each of the plurality of moving GNSS receivers, based on the presence or absence of irregularities detected in GNSS measurement indications of GNSS measurements performed by the moving GNSS receiver whether the moving GNSS receiver is affected by an anomaly.

15. An anomaly detection system for detecting position measurement anomalies in a global navigation satellite system, GNSS, the anomaly detection system comprising:
a storage configured to store, for each of a plurality of stationary GNSS receivers, a position record indicating a recorded position of the stationary GNSS receiver or a GNSS measurement record indicating a recorded GNSS signal parameter value from a past measurement by the stationary GNSS receiver;
a data interface configured to receive, from each of the plurality of stationary GNSS receivers, a GNSS measurement indication indicating a measured GNSS signal parameter value measured by the stationary GNSS receiver; and
processing circuitry configured to determine, for each of the plurality of stationary GNSS receivers, whether the GNSS measurement indication is affected by an anomaly,
wherein the processing circuitry is configured to determine that the measured GNSS measurement indication is affected by an anomaly if the GNSS measurement indication is not received at a configured timing or if the measured GNSS signal parameter value is invalid or deviates from the recorded position or from the recorded GNSS signal parameter value, and
the processing circuitry is configured to, if it is determined that one or more stationary GNSS receivers among the plurality of stationary GNSS receivers are affected by an anomaly, localize an area affected by the anomaly and/or a source of the anomaly based on position records of the one or more stationary GNSS receivers affected by the anomaly and/or based on the measured signal parameter value.
